# EUROPÄISCHE PATENTSCHRIFT

(11) **EP 1 898 551 B1**
(45) Veröffentlichungstag und Bekanntmachung des Hinweises auf die Patenterteilung: **22.07.2009**
(21) Anmeldenummer: 06018570.9
(22) Anmeldetag: 05.09.2006
(51) Int. Cl.: H04L 12/10, H04L 12/40

(54) **Anlage mit einer Systemschnittstelle**
Apparatus comprising a system interface
Appareil comprenant un interface système

(43) Veröffentlichungstag der Anmeldung: 12.03.2008
(73) Patentinhaber: SIEMENS AKTIENGESELLSCHAFT, 80333 München (DE)
(72) Erfinder: Beyer, Stefan, 92263 Ebermannsdorf (DE); Graf, Josef, 92256 Hahnbach (DE); Hauselt, Peter, 92284 Poppenricht (DE)

(56) Entgegenhaltungen:
- DE-A1- 10 206 222
- DE-A1- 19 915 253
- US-A1- 2005 110 618

## Beschreibung

Die Erfindung bezieht sich auf eine Anlage mit einer Systemschnittstelle zum Anschluss einer Busleitung an eine Aktorbaugruppe in einem Steuerungssystem mit einem K-Anschluss zur Verbindung eines Kommunikationskanals und einem K-U-Anschluss zur Verbindung eines Kommunikationsspannungsversorgungskanals.

In der Automatisierungstechnik ist es üblich, einzelne Komponenten einer Anlage über Busleitungen zu vernetzen, wobei dieses Netzwerk im Betrieb eine Vielzahl von Kommunikations- und Versorgungsaufgaben übernimmt.

Zur Vernetzung ist in Fachkreisen beispielsweise das sogenannte Aktuator-Sensor-Interface (AS-Interface) bekannt, welches in einer Ausführungsform auch von der Anmelderin vertrieben wird. Das AS-Interface ist die Basis für ein modulares Vernetzungssystem für Sensoren und Aktuatoren im untersten Feldbereich. Zur Vernetzung der Aktuatoren und Sensoren werden diese über eine gemeinsame Zweidrahtleitung verbunden, in der sowohl die Versorgungsspannung für die Sensoren und Aktoren als auch Kommunikationssignale übertragen werden. Die Druckschrift DE 199 15 253 A1 betrifft eine Verfahren und eine Vorrichtung zum Betreiben eines verteilten Steuersystems in einem Fahrzeug. Das Steuersystem weist mehrere elektrische Steuereinheiten auf, die über ein Kommunikationssystem gegenseitig Daten austauschen. Ferner sind wenigstens zwei voneinander unabhängige Energiequellen vorgesehen, die die Einheiten mit Spannung versorgen, wobei das Kommunikationssystem ein wenigstens zweikanaliges Kommunikationssystem ist, wobei für jeden Kanal wenigstens ein Bustreiber vorgesehen ist, und wenigstens zwei Bustreiber jeweils von einer anderen Energiequelle mit Spannung versorgt werden.

Die Druckschrift US 2005/0110618 A1 offenbart eine Ethernet-Verbindungskarte in einem lokalen Netzwerk (LAN) für ein Kommunikationsendgerät, wobei dieses Endgerät einen ersten internen Bus und erste Stromversorgungsmittel umfasst, die dazu geeignet sind, dieses Endgerät von einer lokalen Energiequelle aus mit Strom zu versorgen. Die Karte umfasst einen zweiten internen Bus, Kopplungsmittel (MCP), um den zweiten internen Bus an den ersten internen Bus zu koppeln und zweite Stromversorgungsmittel, die dafür geeignet sind, diese Karte von einer entfernten Energiequelle aus, die sich in dem lokalen Netzwerk befindet, mit Strom zu versorgen, wobei sie außerdem Mittel zur Steuerung der Kopplungsmittel umfasst, wobei diese Steuerungsmittel logisch mit den ersten und zweiten Stromversorgungsmitteln verbunden sind und so angeordnet sind, dass sie den Kopplungsmitteln den Befehl erteilen, den zweiten internen Bus elektrisch von dem ersten internen Bus zu entkoppeln, sodass ein Betrieb der Karte unabhängig von dem Endgerät für den Fall ermöglicht wird, dass das Vorhandensein einer entfernten Energiequelle und das Fehlen einer lokalen Energiequelle erkannt wird.

Die Druckschrift DE 102 06 222 A1, die wohl den nächstkommenden, druckschriftlichen Stand der Technik bildet, offenbart eine Architektur für ein Kommunikationssystem in einem Fahrzeug, die einen Nachlauf für einzelne Komponenten nach dem Abschalten der Zündung des Fahrzeugs ermöglicht. Hierzu wird ergänzend zu einem CAN-Bus weitere Spannungsversorgungen integriert, die nach dem Abschalten des CAN-Busses den Nachlauf der einzelnen Komponenten möglich macht.

Der Erfindung liegt die Aufgabe zugrunde, eine Anlage mit einer Schnittstelle vorzuschlagen, wobei die Betriebssicherheit der Anlage verbessert ist.

Diese Aufgabe wird durch eine Anlage mit den Merkmalen des Anspruchs 1 gelöst. Bevorzugte oder vorteilhafte Ausführungsformen sind durch die Unteransprüche, die nachfolgende Beschreibung oder die angehängten Figuren offenbart.

Es wird eine Anlage mit einer Systemschnittstelle zum Anschluss an eine Aktorbaugruppe in der Anlage vorgeschlagen. Vorzugsweise ist die Systemschnittstelle integraler Bestandteil der Aktorbaugruppe. Unter einer Aktorbaugruppe wird insbesondere eine Komponente verstanden, die unter Verwendung einer Aktorversorgungsspannung eine Stellbewegung durchführt oder einleitet. Bei der Stellbewegung kann es sich beispielsweise um das Schalten eines Relais, um das Starten eines Motors oder dergleichen handeln. Insbesondere ist die Aktorbaugruppe als Motorstarter oder Motorsteuerungsgerät ausgebildet.

Der konstruktive Ausbau der Systemschnittstelle ist als Buchse oder Stecker realisiert.

Insbesondere weist die Aktorbaugruppe zwei Systemschnittstellen auf, wobei vorzugsweise eine der zwei Systemschnittstellen wie nachfolgend beschrieben ausgebildet ist und die andere Systemschnittstelle entweder analog oder in herkömmlicher, bekannter Weise ausgebildet ist. Eine der Systemschnittstellen dient dabei als Eingangsschnittstelle und die andere Systemschnittstelle als Ausgangsschnittstelle für die Aktorbaugruppe.

Die Systemschnittstelle weist einen K-Anschluss zur Verbindung eines Kommunikationskanals auf, wobei der Kommunikationskanal mittels der Busleitung realisiert wird. Zudem weist die Systemschnittstelle einen K-U-Anschluss zur Verbindung eines Kommunikationsspannungsversorgungskanals auf, der ebenfalls durch die Busleitung realisiert ist. Der Kommunikationsspannungsversorgungskanal führt die Versorgungsspannung der Aktorbaugruppe für Kommunikationszwecke.

Erfindungsgemäß weist die Systemschnittstelle zudem einen A-U-Anschluss auf, der zur Verbindung eines Aktorspannungsversorgungskanals geeignet und/oder ausgebildet ist. Damit umfasst die Systemschnittstelle insgesamt Anschlüsse für zwei voneinander unabhängige Versorgungsspannungen. Bei einer optionalen Ausbildung besteht die Systemschnittstelle nur aus den drei genannten Anschlüssen.

Der Erfindung liegt dabei die Überlegung zugrunde, dass die in der Einleitung gewürdigte Schnittstelle gemäß dem Stand der Technik ursprünglich nur für die Vernetzung von Sensoren entwickelt wurde und keine Aktorspannungsversorgung vorsieht. In einem Produktionsprozess ist es jedoch notwendig, über Not-Aus-Vorrichtungen, zum Beispiel im Fehlerfalle oder bei Gefährdung von Personen, eine Aktorbaugruppe oder Anlagenteile abschalten zu können. Um jedoch eine sichere Abschaltung der Aktorbaugruppe unter Nutzung der aus dem Stand der Technik bekannten Schnittstelle zu gewährleisten, muss die gesamte Kommunikationsspannungsversorgung frei geschaltet, also deaktiviert werden. Neben der Deaktivierung der Aktorbaugruppe führt dies jedoch zusätzlich zu einem Zusammenbrechen der Kommunikation, da diese aus der gleichen Quelle gespeist wird. Bei den bekannten Schnittstellen ist es somit nicht möglich über eine Fehlerdiagnose bei der Aktorbaugruppe festzustellen, ob eine Fehlfunktion aufgetreten beziehungsweise eine Not-Aus-Vorrichtung aktiviert wurde oder ob nur ein Kommunikationsfehler vorliegt. Eine Fehlerdiagnose, die für den Anwender eine notwendige Funktionalität für einen reibungslosen Produktionsprozess darstellt, ist somit insbesondere bei einem Not-Aus in einer Anlage nicht eindeutig festzustellen.

Gemäß der Erfindung wird ein zusätzlicher A-U-Anschluss in der Systemschnittstelle vorgeschlagen, der zur Verbindung einer Aktorspannungsversorgung ausgebildet ist. Mit einer derart ausgebildeten Systemschnittstelle wird eine Kommunikation trotz eines Not-Aus in einem Teil der Anlage komplett aufrechterhalten, da durch das Not-Aus nur die Aktorspannungsversorgung, nicht jedoch die Kommunikationsspannungsversorgung deaktiviert wird. Dadurch ist eine Steuerung ständig in der Lage den aktuellen Zustand der Aktorbaugruppe zu erfragen beziehungsweise die Aktorbaugruppe in der Lage ständig ihren aktuellen Zustand über den Kommunikationskanal an eine Steuerung zu senden.

Zusammenfassend ist es somit möglich die Aktorbaugruppe über ein Not-Aus sicher abzuschalten und zusätzlich mit der Steuerung diesen Zustand über den Kommunikationskanal zu empfangen und auszuwerten. Alternativ zu einem Not-Aus werden andere Vorrichtungen eingesetzt, die eine Abschaltung der Aktorbaugruppe oder -gruppen bewirken. Beispielsweise kann eine Abschaltung auch durch eine Steuerung erfolgen.

Bei einer bevorzugten Ausführungsform sind der K-U-Anschluss und der A-U-Anschluss potentialgetrennt ausgebildet. Bei der Integration der Systemschnittstelle in einer Anlage ist vorzugsweise vorgesehen, dass der Kommunikationsspannungsversorgungskanäl und der Aktorspannungsversorgungskanal ebenfalls potentialgetrennt geführt werden.

Das der Erfindung zugrunde liegende Problem wird durch die Anlage gelöst, die mindestens zwei Aktorbaugruppen und eine Busleitung zur Verbindung der zwei Aktorbaugruppen umfasst, wobei die Busleitung einen Kommunikationskanal und einen Kommunikationsspannungsversorgungskanal aufweist, und wobei die mindestens zwei Aktorbaugruppen jeweils eine Systemschnittstelle wie zuvor beschrieben umfassen. Auf diese Weise ist eine Anlage gebildet, die sämtliche der oben erwähnten Vorteile nutzt.

Bei einer zweckmäßigen Weiterbildung der Anlage sind der Kommunikationskanal und der Kommunikationsspannungsversorgungskanal in der Busleitung als Zweidrahtleitung realisiert. Diese Weiterbildung wird oftmals bei bestehenden Anlagen vorgefunden, die das aus dem Stand der Technik bekannte AS-Interface nutzen.

Gemäß einer weiteren Ausführung wird die Busleitung durch einen Aktorspannungsversorgungskanal ergänzt. Insbesondere ist der Aktorspannungsversorgungskanal als eine weitere Leitung ausgebildet, so dass die Busleitung zumindest abschnittsweise als Dreidrahtleitung realisiert ist. In dieser Ausbildung werden über die Busleitung unabhängig und potentialgetrennt voneinander die Kommunikationsspannungsversorgung und die Aktorspannungsversorgung von Aktorbaugruppe zu Aktorbaugruppe geführt.

Bevorzugt und dem technischen Standard entsprechend beträgt die Kommunikationsspannungsversorgung und/oder die Aktorspannungsversorgung 24 Volt.

Die Aktorversorgungsspannung kann prinzipiell an jeder beliebigen Stelle bei der Anlage eingespeist werden, so zum Beispiel über ein Adapterkabel direkt in die Busleitung oder über einen Anschluss an der Aktorbaugruppe. Es ist jedoch bevorzugt, dass die Aktorspannungsversorgung unter Zwischenschaltung einer Not-Aus-Vorrichtung eingespeist wird. Auf diese Weise ist sichergestellt, dass bei Betätigung der Not-Aus-Vorrichtung die Aktorspannungsversorgung deaktiviert oder freigegeben wird, ohne die Funktionsfähigkeit des Kommunikationskanals oder des Kommunikationsspannungsversorgungskanals zu beeinträchtigen. Eine Betätigung der Not-Aus-Vorrichtung ist bei dieser Ausführung über den Kommunikationskanal zum Beispiel an eine Steuerung übermittelbar.

Bei einer zweckmäßigen Weiterbildung der Anlage ist eine Steuerungsvorrichtung zum Ansteuern der mindestens zwei Aktorbaugruppen vorgesehen, wobei die Steuerungsvorrichtung isoliert oder getrennt zu bzw. von dem Aktorspannungsversorgungskanal ausgebildet bzw. angeordnet ist. Anders ausgedrückt, weist die Schnittstelle der Steuerungsvorrichtung nur einen K-Anschluss und einen K-U-Anschluss und keinen A-U-Anschluss auf. Auch bei dieser zweckmäßigen Weiterbildung wird darauf Rücksicht genommen, dass bei vorhandenen Anlagen Steuerungsvorrichtungen implementiert sind, die eine Schnittstelle gemäß dem Stand der Technik aufweisen.

Bei einer vorteilhaften Weiterbildung der Anlage sind weitere Aktorbaugruppen vorgesehen, die mit den mindestens zwei Aktorbaugruppen und/oder der Steuerungsvorrichtung über den Kommunikationskanal und den Kommunikationsspannungsversorgungskanal verbunden sind. Diese Verbindung kann beispielsweise in einer baum-, stern- oder in einer linienförmigen Netzwerkstruktur ausgebildet sein. Untereinander sind die weiteren Aktorbaugruppen zusätzlich über einen zweiten Aktorspannungsversorgungskanal vernetzt, der unabhängig von dem bereits erwähnten Aktorspannungsversorgungskanal ausgebildet ist und insbesondere über eine andere Quelle mit der Aktorversorgungsspannung versorgt wird.

Vorzugsweise werden durch die mindestens zwei Aktorbaugruppen und die weiteren Aktorbaugruppen zwei voneinander unabhängige Not-Aus-Kreise gebildet. Selbstverständlich sind über weitere Aktorbaugruppen auch weitere Not-Aus-Kreise möglich. Der Vorteil dieser Architektur liegt darin, dass Teile der Anlage jeweils eigenen Not-Aus-Kreisen zugeordnet werden können und über Not-Aus-Vorrichtungen selektiv deaktivierbar sind. Auch bei einer Mehrzahl von unabhängigen Not-Aus-Kreisen ist die Funktionsfähigkeit des Kommunikationskanals sowie des Kommunikationsspannungsversorgungskanals jederzeit gegeben, da die Not-Aus-Betätigung die Kommunikationsverbindung nicht beeinträchtigt.

Insbesondere ist vorgesehen, dass die mindestens zwei voneinander unabhängigen Not-Aus-Kreisen über eine Unterbrechungsbusleitung und/oder eine Adapterbusleitung voneinander getrennt sind. Die genannten Spezialbusleitungen weisen einen Abschluss für den Aktorspannungsversorgungskanal und/oder für den zweiten Aktorspannungsversorgungskanal auf, so dass die unabhängigen Not-Aus-Kreise in Hinblick auf den Aktorversorgungsspannungskanal voneinander isoliert sind.

Zusammenfassend sind die Vorteile der Erfindung darin zu sehen, dass aufgrund der ständig aufrechterhaltenen Kommunikation möglicherweise auftretende Kommunikationsfehler nicht fälschlich als Not-Aus-Situation interpretiert werden. Da die Aktorspannungsversorgungen an beliebiger Stelle in die Anlage einspeisbar ist, ist es möglich durch Adapter- und/oder Unterbrechungsbusleitungen getrennte Not-Aus-Kreise an einer Anlage, insbesondere innerhalb eines Kommunikationsnetzes zu realisieren oder in einem Schaltschrank zu verwirklichen. Zur Umsetzung der Verbindung werden an sich bekannte Busleitungen durch einen Aktorspannungsversorgungskanal zumindest abschnittsweise ergänzt. Bei eventuell vorhandenen Steuervorrichtungen sowie Sensorbaugruppen braucht keine Änderung der Schnittstelle oder Busleitung durchgeführt werden, da die vorgeschlagene Vernetzung einen Mischbetrieb von bekannten Schnittstellen mit der neuen Systemschnittstelle erlaubt. Durch die Integration des Aktorspannungsversorgungskanals in die Busleitung ist kein zusätzlicher Verdrahtungsaufwand für das Weiterschleifen der Aktorspannungsversorgung von einer Aktorbaugruppe zur nächsten Aktorbaugruppe notwendig.

Weitere Merkmale, Vorteile und Wirkungen der Erfindung ergeben sich aus der nachfolgenden Beschreibung bevorzugter Ausführungsbeispiele sowie der beigefügten Figuren. Dabei zeigen:
- FIG 1: ein schematisches Blockschaltbild einer Anlage als ein erstes Ausführungsbeispiel der Erfindung;
- FIG 2: eine schematische Darstellung der Systemschnittstelle gemäß der Erfindung in FIG 1;
- FIG 3: verschiedene Ausführungen von Busleitungen in schematischer Darstellung.

Einander entsprechende Teile oder Größen werden in den nachfolgenden FIG jeweils mit den gleichen Bezugszeichen versehen.

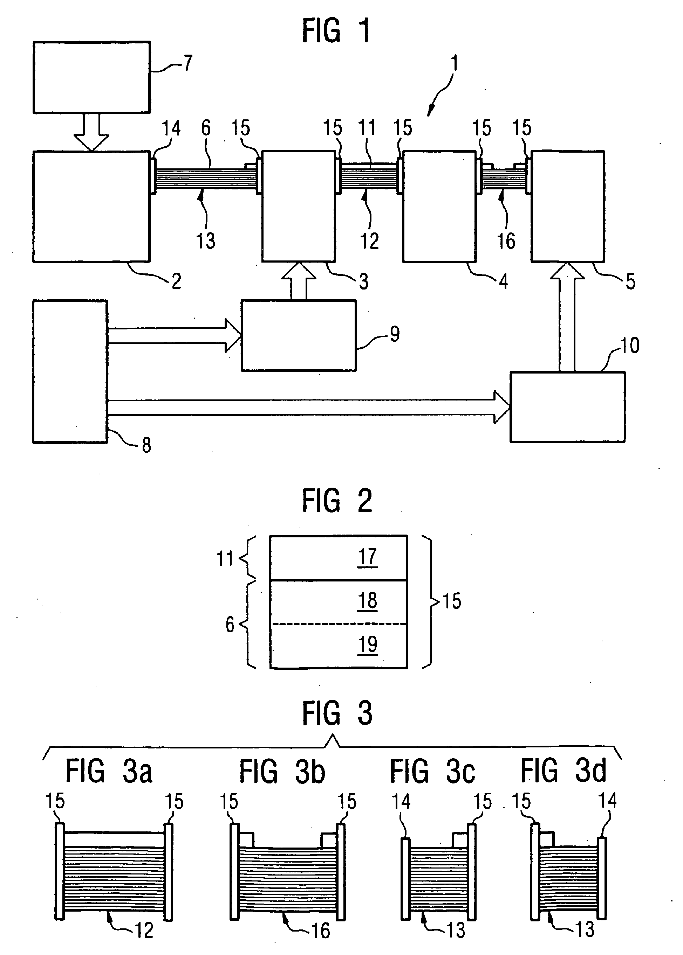

Die FIG 1 zeigt in einer schematischen Blockdarstellung den Aufbau einer Anlage 1, welche eine Steuerungsvorrichtung 2 sowie insgesamt drei Aktorbaugruppen 3, 4 und 5 aufweist. Weitere Aktorbaugruppen oder Sensorbaugruppen sind optional möglich.

Bevorzugt ist die Steuerungsvorrichtung 2 als Master und die Aktorbaugruppen 3, 4 und 5 als Clients realisiert. Zur Etablierung einer Kommunikation ist eine Kommunikationsverbindung 6 vorgesehen, welche ausgehend von der Steuerungsvorrichtung 2 die Aktorbaugruppen 3, 4 und 5 seriell oder linienförmig verbindet.

Die Kommunikationsverbindung 6 ist als Zweidrahtleitung realisiert, wobei eine Leitung als Kommunikationsleitung und die andere Leitung als Kommunikationsspannungsversorgungsleitung ausgebildet ist. Der durch die Kommunikationsverbindung 6 gebildete Bus weist somit einen Kommunikationskanal und einen Kommunikationsspannungsversorgungskanal auf, wobei die Kommunikationsversorgungsspannung durch eine erste Spannungsquelle 7 über die Steuerungsvorrichtung 2 in die Kommunikationsverbindung 6 eingespeist wird.

Zur ergänzenden Versorgung der Aktorbaugruppen 3, 4 und 5 ist eine zweite Spannungsquelle 8 angeschlossen, die eine Aktorspannungsversorgung über einen ersten Not-Aus-Schalter 9 und parallel dazu über einen zweiten Not-Aus-Schalter 10 an die Aktorbaugruppe 3 bzw. Aktorbaugruppe 5 liefert. Sowohl erste Spannungsquelle 7 als auch zweite Spannungsquelle 8 weisen einen Spannungspegel von 24 Volt auf und sind voneinander potentialgetrennt realisiert.

Der erste Notausschalter 9 beziehungsweise der zweite Notausschalter 10 sind ausgebildet, um bei Betätigung die Spannungsversorgung von der zweiten Spannungsquelle 8 zu der Aktorbaugruppe 3 beziehungsweise 5 zu unterbrechen. Zur Versorgung der Aktorbaugruppe 4 mit der Aktorversorgungsspannung ist ergänzend zu der Kommunikationsverbindung 6 eine Aktorspannungsversorgungsleitung 11 vorgesehen, die einen Aktorspannungsversorgungskanal zwischen der Aktorbaugruppe 3 und der Aktorbaugruppe 4 bildet. Mit dieser Architektur wird die Aktorspannungsversorgung ausgehend von der zweiten Spannungsquelle 8 über den Not-Aus-Schalter 9 und weiter über die Aktorbaugruppe 3 bis zu der Aktorbaugruppe 4 durchgeschleift. Bei Betätigung des ersten Not-Aus-Schalters 9 wird sowohl für die Aktorbaugruppe 3 als auch für die Aktorbaugruppe 4 die Aktorversorgungsspannnung deaktiviert.

Wie aus der FIG 1 zu entnehmen ist, ist die Aktorbaugruppe 3 und die Aktorbaugruppe 4 über eine Systembusleitung 12 verbunden, die die Kommunikationsverbindung 6 und die Aktorspannungsversorgungsleitung 11 umfasst. Die Verbindung zwischen der Steuerungseinrichtung 2 und der Aktorbaugruppe 3 wird dagegen über eine Adapterbusleitung 13 realisiert.

Die unterschiedlichen Busleitungen werden verwendet, weil die Steuerungsvorrichtung 2 eine Standardschnittstelle 14 aufweist, welche nur Anschlüsse für den Kommunikationskanal sowie für den Kommunikationsversorgungskanal umfasst.

Die Aktorbaugruppe 3 oder 4 weisen dagegen Systemschnittstellen 15 auf, die - ebenso wie die Standardschnittstelle 14 - Anschlüsse für den Kommunikationskanal und für den Kommunikationsspannungsversorgungskanal sowie ergänzend einen Anschluss für den Aktorspannungsversorgungskanal aufweist.

Damit verbindet die Systembusleitung 12 zwei Systemschnittstellen 15, wohingegen die Adapterbusleitung eine Standardschnittstelle 14 mit einer Systemschnittstelle 15 vernetzt.

Für die Verbindung zwischen der Aktorbaugruppe 4 und der Aktorbaugruppe 5 sind zwar wiederum zwei Systemschnittstellen 15 bereitgestellt, jedoch sind diese über eine Unterbrechungsbusleitung 16 miteinander verbunden, die - wie in Zusammenhang mit der FIG 3b noch erläutert wird - nur einen Kommunikationskanal und einen Kommunikationsversorgungsspannungskanal, nicht jedoch einen Aktorversorgungsspannungskanal etabliert.

Der gezeigte Aufbau der Anlage 1 weist u.a. den Vorteil auf, dass Komponenten mit einer Standardschnittstelle 14 und Komponenten mit einer Systemschnittstelle 15 miteinander verschaltet werden können.

Funktional betrachtet führt eine Betätigung des ersten Not-Aus-Schalters 9 zu einer Deaktivierung der Aktorspannungsversorgung für die Aktorbaugruppen 3 und 4. Diese werden damit freigegeben beziehungsweise stromlos gesetzt. Nachdem der erste Not-Aus-Schalter 9 jedoch nur auf die Aktorspannungsversorgung wirkt, nicht jedoch auf die Kommunikationsverbindung 6, kann die Steuerungsvorrichtung 2 den Zustand der Aktorbaugruppen 3 beziehungsweise 4 jederzeit, insbesondere auch bei betätigten ersten Not-Aus-Schalter 9, abfragen. Weiterhin erlaubt die dargestellte Anlage 1, dass getrennte Not-Aus-Kreise gebildet werden, wobei durch die Aktorbaugruppe 3 und 4 ein erster Not-Aus-Kreis gebildet wird, der durch den ersten Notausschalter 9 betätigt wird und durch die Aktorbaugruppe 5 ein zweiter Not-Aus-Kreis gebildet wird, der durch den zweiten Notausschalter 10 betätigt wird.

Die FIG 2 zeigt in einer schematischen Darstellung nochmals den Aufbau der Systemschnittstelle 15, welche einen Anschluss für einen Aktorspannungsversorgungskanal 17 sowie einen Anschluss für einen Kommunikationskanal 18 und einen Anschluss für einen Kommunikationsspannungsversorgungskanal 19 aufweist. Kommunikationskanal 18 und Kommunikationsspannungsversorgungskanal 19 werden über die Kommunikationsverbindung 6 angeschlossen. Der Aktorspannungsversorgungskanal 17 wird über die Aktorspannungsversorgungsleitung 11 kontaktiert.

Die FIG 3a,b,c,d zeigen vergrößert verschiedene Ausführungsformen der Busleitung zwischen der Steuerungsvorrichtung 2 beziehungsweise den Aktorbaugruppen 3, 4 und 5.

FIG 3a illustriert die Systembusleitung 12, welche zwei Systemschnittstellen 15 miteinander verbindet, wobei alle drei möglichen Kanäle durchgeschaltet sind.

Die FIG 3b zeigt dagegen eine Unterbrechungsbusleitung 16, die zwar zwei Systemschnittstellen 15 miteinander verbindet, wobei jedoch die Anschlüsse für den Aktorspannungsversorgungskanal nicht miteinander verbunden sind. Eine derartige Unterbrechungsbusleitung 16 wird beispielsweise zur Trennung von zwei Notauskreisen voneinander verwendet.

Die FIG 3c bzw. 3d zeigen jeweils eine Adapterbusleitung 13, die jeweils eine Standardschnittstelle 14 mit einer Systemschnittstelle 15 verbindet. Während die Standardschnittstelle 14 vollständig, das heißt im Hinblick auf den Kommunikationskanal und den Kommunikationsspannungsversorgungskanal, kontaktiert ist, weist die Adapterbusleitung 13 an der Seite für die Systemschnittstelle 15 nur einen Abschluss für den Aktorspannungsversorgungskanal auf. Mit dieser Adapterbusleitung 13 ist es möglich, Komponenten mit einer Standardschnittstelle 14, wie zum Beispiel die Steuerungseinrichtung 2 oder Sensorbaugruppen (nicht gezeigt), mit Aktorbaugruppen zu verbinden, welche eine Systemschnittstelle 15 aufweisen.

## Patentansprüche

1. Anlage (1) umfassend mindestens zwei Aktorbaugruppen (3; 4;5) und eine Busleitung (12;13;16) zur Verbindung der zwei Aktorbaugruppen, wobei die Busleitung einen Kommunikationskanal und einen Kommunikationsspannungsversorgungskanal aufweist, wobei die mindestens zwei Aktorbaugruppen (3;4;5) jeweils eine Systemschnittstelle (15) aufweisen, welche zum Anschluss der Busleitung (12;13;16) an die Aktorbaugruppen (3; 4;5) in einem Steuerungssystem ausgebildet sind, wobei die Systemschnittelle (15) einen K-Anschluss (18) zur Verbindung des Kommunikationskanals, einen K-U-Anschluss (19) zur Verbindung des Kommunikationsspannungsversorgungskanals und einen A-U-Anschluss (17) zur Verbindung eines Aktorspannungsversorgungskanals aufweist,
**dadurch gekennzeichnet,**
**dass** die Aktorspannungsversorgung unter Zwischenschaltung einer Not-Aus-Vorrichtung (9;10) in eine der Aktorbaugruppen (3;5) oder in die Busleitung (12) eingespeist wird, wobei die Not-Aus-Vorrichtung eine Abschaltung der Aktorbaugruppe oder -gruppen bewirkt, wobei eine Betätigung der Not-Aus-Vorrichtung (9;10) über den Kommunikationskanal übermittelbar ist.

2. Anlage (1) nach Anspruch 1, **dadurch gekennzeichnet, dass** der K-U-Anschluss (19) und der A-U-Anschluss (17) potentialgetrennt ausgebildet sind.

3. Anlage (1) nach Anspruch 1 oder 2, **dadurch gekennzeichnet, dass** der Kommunikationskanal und der Kommunikationsspannungsversorgungskanal in der Busleitung (12;13,16) als Zweidrahtleitung realisiert sind.

4. Anlage (1) nach einem der vorhergehenden Ansprüche, **dadurch gekennzeichnet, dass** die Busleitung (12) einen Aktorspannungsversorgungskanal aufweist.

5. Anlage (1) nach einem der vorhergehenden Ansprüche, **dadurch gekennzeichnet, dass** die Kommunikationsspannung und/oder die Aktorspannung 24 V beträgt.

6. Anlage (1) nach einem der vorhergehenden Ansprüche, **gekennzeichnet durch** eine Steuerungsvorrichtung (2) zur Ansteuerung der mindestens zwei Aktorbaugruppen (3;4;5), wobei die Steuerungsvorrichtung (2) isoliert oder getrennt zu dem Aktorspannungsversorgungskanal ausgebildet bzw. angeordnet ist.

7. Anlage (1) nach einem der vorhergehenden Ansprüche, **gekennzeichnet durch** weitere Aktorbaugruppen, wobei die weiteren Aktorbaugruppen mit den mindestens zwei Aktorbaugruppen (3;4;5) und/oder der Steuerungsvorrichtung (2) über den Kommunikationskanal und den Kommunikationsspannungsversorgungskanal und untereinander über einen zweiten Aktorspannungsversorgungskanal vernetzt sind.

8. Anlage (1) nach Anspruch 7, **dadurch gekennzeichnet, dass** die mindestens zwei Aktorbaugruppen (3;4;5) und die weiteren Aktorbaugruppen zwei voneinander unabhängige Not-Aus-Kreise bilden.

9. Anlage (1) nach Anspruch 8, **dadurch gekennzeichnet, dass** die zwei voneinander unabhängigen Not-Aus-Kreise über eine Unterbrechungsbusleitung (16) und/oder eine oder mehrere Adapterbusleitungen voneinander getrennt sind, die einen Abschluss für den Aktorspannungsversorgungskanal und/oder den zweiten Aktorspannungsversorgungskanal aufweist.

## Claims

1. Installation (1) comprising at least two actuator assemblies (3; 4; 5) and a bus line (12; 13; 16) for connection of the two actuator assemblies, with the bus line having a communication channel and a communication voltage supply channel, the at least two actuator assemblies (3; 4; 5) each having one system interface (15), which are designed for connection of the bus line (12; 13; 16) to the actuator assembly (3; 4; 5) in a control system, the system interface (15) having, a K connection (18) for connection of the communication channel, with a K-U connection (19) for connection of the communication voltage supply channel and an A-U connection (17) for connection of an actuator voltage supply channel, **characterized in that** the actuator voltage supply is fed into one of the actuator assemblies (3; 5) or into the bus line (12) with the interposition of an emergency-off apparatus (9; 10), the emergency-off apparatus operating the deactivation of the actuator assembly or actuator groups, an operation of the emergency-off apparatus (9; 10) being transmitted via the communication channel.

2. Installation (1) according to Claim 1, **characterized in that** the K-U connection (19) and the A-U connection (17) are floating.

3. Installation (1) according to Claim 1 or 2, **characterized in that** the communication channel and the communication voltage supply channel in the bus line (12; 13; 16) are in the form of a two-wire line.

4. Installation (1) according to one of the preceding claims, **characterized in that** the bus line (12) has an actuator voltage supply channel.

5. Installation (1) according to one of the preceding claims, **characterized in that** the communication voltage and/or the actuator voltage are/is 24 V.

6. Installation (1) according to one of the preceding claims, **characterized by** a control apparatus (2) for driving the at least two actuator assemblies (3; 4; 5), with the control apparatus (2) being designed or arranged such that it is insulated or isolated from the actuator voltage supply channel.

7. Installation (1) according to one of the preceding claims, **characterized by** further actuator assemblies, with the further actuator assemblies being networked with the at least two actuator assemblies (3; 4; 5) and/or the control apparatus (2) via the communication channel and the communication voltage supply channel, and being networked with one another via a second actuator voltage supply channel.

8. Installation (1) according to Claim 7, **characterized in that** the at least two actuator assemblies (3; 4; 5) and the further actuator assemblies form two mutually independent emergency-off circuits.

9. Installation (1) according to Claim 8, **characterized in that** the two mutually independent emergency-off circuits are isolated from one another via an interruption bus line (16) and/or one or more adapter bus lines, which has a termination for the actuator voltage supply channel and/or the second actuator voltage supply channel.

## Revendications

1. Installation (1) comprenant au moins deux modules (3, 4, 5) d'actionneur et une ligne (12, 13, 16) de bus pour la liaison des deux modules d'actionneur, la ligne de bus ayant un canal de communication et un canal d'alimentation en tension de communication, les au moins deux modules (3, 4, 5) d'actionneur ayant respectivement une interface (15) système, qui sont constituées pour le raccordement de la ligne (12, 13, 16) de bus aux modules (3, 4, 5) d'actionneur dans un système de commande, l'interface (15) système ayant une borne (18) K pour la liaison du canal de communication, une borne (19) K-U pour la liaison du canal d'alimentation en tension de communication et une borne (17) A-U pour la liaison d'un canal d'alimentation en tension d'actionneur,
**caractérisée,**
**en ce que** l'alimentation en tension d'actionneur est injectée avec interposition d'un disposition (9, 10) de secours-d'arrêt dans l'un des modules (3, 5) d'actionneur ou dans la ligne (12) de bus, le dispositif de secours-arrêt provoquant une mise hors circuit des modules d'actionneur ou des groupes d'actionneurs, un actionnement du dispositif (9, 10) de secours-arrêt pouvant être transmis par le canal de communication.

2. Installation (1) suivant la revendication 1, **caractérisée en ce que** la borne (19) K-U et la borne (17) A-U sont constituées d'une manière séparée en potentiel.

3. Installation (1) suivant la revendication 1 ou 2, **caractérisée en ce que** le canal de communication et le canal d'alimentation en tension de communication sont réalisés dans la ligne (12, 13, 16) de bus en ligne bifilaire.

4. Installation (1) suivant l'une des revendications précédentes, **caractérisée en ce que** la ligne (12) de bus a un canal d'alimentation en tension d'actionneur.

5. Installation (1) suivant l'une des revendications précédentes, **caractérisée en ce** la tension de communication et/ou la tension d'actionneur est de 24 V.

6. Installation (1) suivant l'une des revendications précédentes, **caractérisée par** un dispositif (2) de commande des au moins deux modules (3, 4, 5) d'actionneur, le dispositif (2) de commande étant constitué ou disposé de manière isolée ou séparée du canal d'alimentation en tension d'actionneur.

7. Installation (1) suivant l'une des revendications précédentes, **caractérisée par** des modules d'actionneur supplémentaires, les modules d'actionneur supplémentaires étant mis en réseau avec les au moins deux modules (3, 4, 5) et/ou avec le dispositif (2) de commande par le canal de communication et par le canal d'alimentation en tension de communication et entre eux par un deuxième canal d'alimentation en tension d'actionneur.

8. Procédé suivant la revendication 7, **caractérisé en ce** les au moins (3, 4, 5) d'actionneur et les modules d'actionneur supplémentaires forment deux circuits de secours-arrêt indépendants l'un de l'autre.

9. Procédé suivant la revendication 8, **caractérisé en ce que** les deux circuits de secours-arrêt indépendants l'un de l'autre sont séparés l'un de l'autre par une ligne (16) de bus d'interruption et/ou par une ou plusieurs lignes de bus d'adaptateur, qui ont une terminaison pour le canal d'alimentation en tension d'actionneur et/ou pour le deuxième canal d'alimentation en tension d'actionneur.
